# EUROPEAN PATENT SPECIFICATION

(11) **EP 2 500 371 B1**
(45) Date of publication and mention of the grant of the patent: **24.01.2018**
(21) Application number: 12159237.2
(22) Date of filing: 13.03.2012
(51) Int. Cl.: C08H 1/06, C08L 89/04, C08L 89/06

(54) **Biocomposite fertiliser materials**
Bioverbundstoffdüngemittel
Matériaux biocomposites fertilisants

(30) Priority: 18.03.2011 IT MI20110433
(43) Date of publication of application: 19.09.2012
(73) Proprietor: SICIT 2000 S.P.A., 36072 Chiampo, VI (IT)
(72) Inventor: Sartore, Luciana, 36072 CHIAMPO (VI) (IT); Barbaglio, Marzia, 36072 CHIAMPO (VI) (IT); Neresini, Massimo Costantino, 36072 CHIAMPO (VI) (IT); Candido, Manuela Cinzia, 36072 CHIAMPO (VI) (IT)
(74) Representative: Minoja, Fabrizio

(56) References cited:
- US-A- 6 027 608
- US-A1- 2004 072 976
- US-A1- 2008 279 802

## Description

### ABSTRACT

The present invention relates to the preparation of biocomposite materials with a fertilizing action obtainable by crosslinking protein hydrolyzates with epoxidized vegetable oils. The materials according to the invention will also contain suitable fillers and specific additives.

### FIELD OF INVENTION

The present invention relates to the preparation of materials which can be defined as biocomposites because they consist of protein hydrolyzates crosslinked with epoxidized vegetable oils, in particular epoxidized linseed or soybean oil and suitable fillers. Said materials are suitable to be processed like conventional plastics, and can therefore be used to make different products such as plant pots, trays, containers, discs, granulates or sheets, or used as traditional fertilisers in the form of granules, pellets or scales. These materials are also suitable for application by spray techniques, thus forming a film directly on the surface of application, as in the case of mulch sprays in agriculture, for example.

The materials according to the invention can be formulated with suitable nutrients, fillers, dispersing agents, plant protection products and other substances useful for the intended uses.

### PRIOR ART

The manufacture of biodegradable materials in general and containers for agriculture in particular is a subject of considerable interest.

Plant pots and containers made of various materials are commonly used in agriculture for herbaceous (annual) crops, which are sown in pre-molded multiple containers or small plant pots and subsequently transplanted into the open field, and for shrubs and trees (perennials), especially ornamental species, which are grown in plant pots for all or part of their cycle.

In any event, at the time of transplanting or planting out, the plant must be removed from the plant pot or container and planted in the ground with the root apparatus "bare", i.e. in direct contact with the soil. This nearly always represents a source of stress for the plant, in both mechanical terms (torn roots) and nutritional terms, because as soon as they are planted in the ground, the roots find themselves in a habitat where less water and nutrients are available.

Biodegradable containers suitable for sowing seeds and growing seedlings are known; when they are used, plants which have reached maturity or the desired size are transplanted or planted out directly, without no need to remove the container, which breaks down after being placed in the soil. As the degradation times are rather long (approximately 4-5 years), the container must be broken or cut before planting to allow the roots of the seedlings to develop. US 2009249688 describes plant containers based on ply-starch material which are fully degradable within a year. This period is still too long, however, and inadequate for the roots to cross the walls of the plant pots and develop well in the soil.

US 20050188612 discloses biodegradable plant containers consisting of a blend of biodegradable plastic (PLA Cargill Dow manufactured from corn starch and carbohydrates from other plants) and natural fertilisers obtained from coffee grounds. The biodegradable plant pot with incorporated natural fertilizer is lined with a film that protects it against degradation during use, but can be pierced by the roots after the degradation of the container planted in the soil. The fertilizer is not available until that time; the duration of the biodegradable plant pot is 6 months; if transplanted into the soil, the time required for degradation and piercing of the protective film is 2 months.

Protein hydrolyzates obtained from collagen possess a recognised fertilizing and biostimulating activity, because they stimulate the metabolism of the plant and the microbial activity of the soil. These biostimulation effects lead to more efficient absorption of nutrients (especially nitrogen), greater fertility of the flowers, better regulation of the internal fluid balance, better general health of the plant, which means greater resistance to stress and attack by parasites, and activation of the native microflora of the soil, with better mineralization and absorption of nutrients.

In general, protein hydrolyzates are used in the most critical stages of the growing cycle (transplanting, vegetative growth, flowering and fruiting), thus improving the performance of the plants grown and reducing the use of fertilisers and pesticides, other conditions being equal.

Protein hydrolyzates deriving from collagen are prepared from by-products of leather manufacture, and therefore derive from processes of recovery of resources.

WO 2008075279 discloses biodegradable plastics consisting of peptides deriving from protein hydrolyzates chemically bonded to segments of polyethylene glycol (PEG) with variable lengths. Said materials can be used to prepare sheets and discs for mulching, seed trays, plant pots, fabrics and protective netting.

However, their manufacture partly involves the use of materials not originating from renewable sources but substances of petrochemical origin, such as PEG.

There is therefore a need for containers usable in agriculture which are made solely from materials obtainable from renewable sources, mainly of natural origin, which are not only biodegradable but also have biostimulating/fertilizing properties, thus allowing optimum root development and preventing transplant shock, and which decompose in modulatable times, gradually releasing the nutrients required for the physiological health of the plant.

### DESCRIPTION OF THE INVENTION

The present invention relates to a biocomposite wholly deriving from renewable sources with a matrix obtainable from protein hydrolyzate, epoxidized vegetable oils, especially epoxidized linseed or soybean oil, and fillers and/or fibers of natural origin.

The materials according to the invention can be processed like any conventional plastic of petrochemical origin, and can be formed to any desired shape. The said materials can be combined with nutrients for specific fertilization, fillers to ensure the pre-set duration, and other materials to provide the required mechanical characteristics.

The use of the new biocomposites is advantageous from the social and economic standpoint because it does not reduce the availability of foodstuffs, as the raw materials used originate from by-products of the agrifood industry.

Depending on the density of crosslinking, the biodegradable biocomposites according to the invention can modulate the rigidity, strength and degradation rate of the material.

The manufacturing process involves chemical modification of the amine and/or carboxyl and/or hydroxyl groups of the protein hydrolyzate.

The protein hydrolyzate is preferably obtained from by-products, waste products or residues originating from the tanning industry, obtained before and after the tanning stage, or from by-products and/or products of plant origin, agroindustrial waste, by-products and/or products of animal origin.

Preferred examples of protein hydrolyzates derive from the processing of tanning waste. They are characterised by a particular amino acid composition deriving from the starting material. Other protein hydrolyzates of different origins can be used to meet particular market and operational demand, such as the need for material deriving only from raw materials not of animal origin, or the need for differentiated mechanical characteristics, degradability or compositions.

The protein hydrolyzate is grafted with epoxidized vegetable oils such as epoxidized linseed or soybean oil. Epoxidized vegetable oils are manufactured on an industrial scale and used mainly for polymers, coatings, adhesives and similar industrial products. The grafting reaction with the protein hydrolyzate is conducted in a concentrated water/oil mixture at 40-90°C, typically 60°C.

Mixtures of protein hydrolyzates with different degrees of hydrolysis, which can be released and are therefore available to the plant at different times, can also be used. The fertilizing/biostimulating action can be modulated to give a first effect at the time of transplanting and slow release over time during the subsequent growth stages.

Protein hydrolyzates containing salts and/or chelates of micro- and macroelements can be added for fertilization, as can protein hydrolyzates salified or complexed with micro- and macro-elements, according to the desired release times. Substances able to maintain the pH of the soil near the root apparatus at the values considered ideal for root growth and development can also be added. The substances added can provide generic or specific fertilization formulations for the growth of a specific plant species.

Fillers, and optionally other additives, able to modulate the mechanical and technological properties of the material are added to the matrix consisting of polymer derivatives of protein hydrolyzate. Examples of said substances include:
- natural fillers such as lignocellulose fibers or by-products of the agribusiness or woodworking industries, such as semolina, groats, chaff, straw, tomato skins, citrus fruit peel, sawdust or wood shavings, preferably wood meal, with the purpose of improving the thermo-mechanical properties and resistance to biodegradation; fillers with different rigidity, mechanical strength and morphology characteristics have been used;
- inorganic substances such as calcium carbonate, calcium sulphate, talc, silica or argillaceous minerals to provide specific mechanical characteristics, and other inorganic substances to enrich the growth medium selectively, depending on the crop;
- organic and inorganic substances deriving from materials recovered from agroindustrial or industrial processes, which can thus be reused advantageously;
- other products widely used in the agricultural sector such as humic acids, salts, blood meal, meat meal, fish meal, hair meal, feather meal, peasemeal, lupin meal, distiller's wash and molasses, which can be used to compose specialist fertilization formulations. In particular cases it may be necessary to add plant protection products to prevent or treat specific and/or parasitic diseases;
- substances commonly used in the industrial sector which improve the mixing, extrusion, film-coating and moldability processes and modify the morphology of the materials, such as plasticizers, curing agents, thickeners and dispersing agents;
- pigments (such as iron oxides and lampblack) to give a different color;
- protein hydrolyzates with particular foaming and/or gelling properties, to prepare low-density materials for particular applications and requirements.

The protein hydrolyzates are present in the biocomposites according to the invention in percentages ranging between 20 and 80%, preferably between 35 and 65%. The epoxidized vegetable oils are present in percentages ranging between 5 and 20%, while the natural fillers and other substances for fertilizing or other purposes are present in percentages ranging between 5 and 60%, preferably between 25 and 50%. The percentages are expressed by weight.

Mixtures with a low degree of moisture are processed with continuous or discontinuous plastics mixers to obtain a thermoplastic material that further crosslinks and hardens during the subsequent molding and drying stages. Molding is performed by compression and injection. The material is formed, by compression- and injection-molding, at temperatures of 20-60°C, using steel moulds of different shapes which undergo surface pre-treatment to minimise the adherence of the material. Additives such as condensing agents or acid or basic crosslinking agents can be added during reactive mixing.

The matrix of the biocomposite used as container material will also serve as carrier for slow, controlled-release fertilizer. This technique is highly advantageous, because it is possible, in a single administration, to:
- provide the correct nutritional input for the whole growth period of the crop, balancing the plant's requirements with the right quantity of nutrients released;
- reduce the use of other chemical fertilisers;
- prevent excessive soil salinity caused by the accumulation of nutrient salts;
- limit leaching and percolation of the nutrients, which leads to accumulation and pollution of the ground water;
- reduce the number of times the crops need to be fertilized, thus saving quite a large amount of work.

The additives and optional fertilisers can be incorporated in the crosslinked polymer matrix, which slowly releases the required substances as it disintegrates.

The materials described can be used to mould plant pots, trays, containers or discs, to make sheets, and to prepare fertilisers in their best-known forms, namely granules, pellets and scales.

The materials according to the invention are also suitable for use in the form of films obtained with spray techniques. In this case the material is used directly in aqueous suspension at a concentration of between 5% and 40% (W/W), after performing the grafting reaction on the matrix and dispersion of the filler.

The materials can therefore be applied by spray techniques and form a film directly on the application surface, as in the case of mulch sprays in agriculture. This application can be particularly advantageous as a "sheet prepared in situ", where the classic plastic sheet cannot be used and manual operations are inevitable, such as in the early stages of plant growth and in general in the cultivation of edible fruit in glasshouses and the open field. Mulching with plastic sheets is extensively used because it keeps weeds under control, reduces water loss by evaporation, heats the soil and keeps clean the edible parts that come into contact with the soil.

In addition to particularly advantageous soil cover with a sheet which can be incorporated in the soil at the end of the growing cycle, thus eliminating the need to dispose of large quantities of plastic, the materials according to the invention also allow the input and release of nutrients and biostimulus modulated over time, which means that fertilizer use can be optimized and limited.

This technique is particularly useful for crops grown in the open field and in glasshouses, such as canning tomatoes, strawberries, courgettes, asparagus, etc., as sheets which are "customized" in terms of composition and ratios between nutrients can be used for each crop.

This technique can be useful, for example, in the case of vines, which require a considerable nitrogen input at the first stage of fruiting and a potassium input at the fruit ripening stages, thus eliminating the use of desiccants to prevent weed development.

The materials according to the invention are suitable for use as seed coating substances to make them easier to handle, to increase the size so as to facilitate mechanical sowing, and to protect against predators, and at the same time provide suitable fertilization to improve germination and subsequent development and to prepare microcapsules of active substances for administration to the leaves or roots, or directly to the fruit, to ensure their correct release over time and prevent leaching.

Objects in common and/or industrial use can be made with the materials according to the invention and later, when their original function has expired, can be advantageously used as generic or specific fertilisers for some categories of crops due to the specific characteristics of the products from which they derive. For example, an object or packaging made with the materials described, instead of being sent to the tip, could be used, possibly after crushing, as fertilizer in the soil or for house plants, with obvious environmental and financial advantages.

The following examples illustrate the invention in greater detail.

### Examples 1-8

Examples 1-8 relate to samples prepared as follows:
An established quantity of protein hydrolyzate was dissolved at the temperature of 40°C and a suitable quantity of epoxidized vegetable oil, and optionally crosslinking agents and wood meal, in the proportions reported in table 1, were added under stirring. The samples were characterised by mechanical tests, compression molded at ambient temperature to obtain biodegradable containers, and tested in the glasshouse.

**Table 1**

| **Examples** | **Sample** | **IP*** (%) | **ELO** (%) | **ESO** (%) | **ET(NH₂)₂ (%)** | **Filler** (%) |
|---|---|---|---|---|---|---|
| **1** | 25 | A - 45.34 | 10.74 | - | 0.7 | 43.30 |
| **2** | 26 | A - 43.78 | - | 12.38 | 0.6 | 43.20 |
| **3** | 27 | B - 44.71 | 10.56 | - | 0.65 | 44.08 |
| **4** | 28 | B - 43.10 | - | 12.38 | 0.73 | 43.84 |
| **5** | 29 | B - 37.10 | - | 12.60 | 0.74 | 49.57 |
| **6** | 30 | B - 43.04 | - | 12.38 | 0.73 | 43.86 |
| **7** | 31 | B - 43.32 | - | 12.58 | - | 44.10 |
| **8** | 32 | B - 38.08 | - | 14.99 | 0.89 | 46.04 |

| | | | | | | |
|---|---|---|---|---|---|---|
| Filler: lignocellulose fibers | | | | | | |

### Examples 9-21

Examples 9-18 relate to samples prepared as follows:
An established quantity of protein hydrolyzate and protein hydrolyzate with gelling properties in the proportions reported in table 2 were mixed at the temperature of 60°C, and a suitable quantity of epoxidized vegetable oil, and optionally crosslinking agents and wood meal, were added under stirring (table 2). The samples were mixed with a discontinuous mixer and molded with industrial presses (conditions reported in the table).

**Table 2**

| Examples | Sample | IP 1 (%) | IP 2 (%) | ESO (%) | Filler (%) | H₂O (%) | Mixer | Molding |
|---|---|---|---|---|---|---|---|---|
| 9 | 34 | - | 39.25 | 23.76 | 36.99 | - | Brabender 50°C; 30 rpm | T=150°C; p=30bar |
| | 35 | - | 39.78 | 17.46 | 42.76 | - | | T=150°C; p=30bar |
| | 36 | - | 41.66 | 16.69 | 41.65 | - | | T=150°C; p=30bar |
| | 37 | 17.05 | 25.55 | 16.92 | 40.48 | - | | T=150°C; P=30bar |
| 10 | 39 | 41.65 | - | 15.56 | 41.81 | 29.36 | | T=90°C; P=30bar; T=70°C; P=30bar |
| | 40 | 39.6 | - | 16.59 | 43.81 | 24.16 | | T=120°C; P=30bar; T=70°C; P=30bar |
| 11 | 41 | 20.87 | 20.6 | 17.33 | 41.19 | 23.75 | | T=70°C; P=30bar |
| | 42 | 38.71 | - | 15.52 | 45.77 | 23.45 | | T=60°C; P=30bar; T=45°C; P=20bar |
| 12 | 43 | 22.48 | 15.88 | 16.12 | 45.52 | 23.60 | | T=45°C; P=30bar; T=60°C; P=30bar |
| 13 | 44 | 34.10 | - | 15.84 | 50.05 | 21.55 | | T=45°C; p=30bar T=60°C; p=30bar |
| 14 | 45 | 22.71 | 15.26 | 16.91 | 45.13 | 18.53 | | T=45°C; p=30bar; T=60°C; p=30bar |
| 15 | 46 | 22.31 | 15.33 | 17.15 | 45.21 | 18.50 | Brabender 30°C; 20 rpm | T=55°C; p=30bar |
| 16 | 47 | 22.56 | 14.99 | 17.3 8 | 45.0 7 | 20.4 5 | Brabender 30°C; 20 rpm | T=55°C; p=30bar |
| 17 | 48 | - | 37.73 | 17.3 4 | 44.9 2 | 16.0 4 | Brabender 30°C; 20 rpm | T=55°C; p=30bar |
| | 49 | 22.25 | 15.37 | 17.0 8 | 45.2 9 | 18.4 3 | Brabender 30°C; 20 rpm | T=45°C; p=30bar; T=55°C; p=30bar |
| 18 | 50 | 22.31 | 15.30 | 17.1 0 | 45.2 8 | 18.4 4 | Brabender 35°C; 20 rpm | T=55°C; p=30bar; d=1.20; d=1.045 |
| | 51 | 22.40 | 15.37 | 17.1 3 | F: A 45.0 9 | 18.5 4 | Brabender 35°C; 20 rpm | T=55°C; p=30bar |
| | 52 | 22.34 | 15.35 | 17.1 9 | F:B 45.1 1 | 18.5 2 | Brabender 35°C; 20 rpm | T=55°C; p=30bar |
| | 53 | 22.34 | 15.45 | 17.0 9 | F:C 45.1 1 | 18.6 1 | Brabender 35°C; 20 rpm | T=55°C; p=30bar; T=50°C; p=30bar |
| | 54 | 22.38 | 15.33 | 17.1 4 | 45.1 4 | 18.7 9 | Brabender 30°C; 20 rpm | T=RT; p=30bar; T=150°C; p=30bar |
| | 55 | 22.39 | 15.39 | 17.1 5 | F:C 45.0 7 | 18.4 8 | Brabender 30°C; 20 rpm | Adherence tests with teflon-coated slabs |

| | | | | | | | | |
|---|---|---|---|---|---|---|---|---|
| F: A - Wood meal CB 200; B - Wood fibers HM 300; C - Wood meal 150/200; unless otherwise specified, the meal used is wood meal 75/150. | | | | | | | | |

Some specific formulations of protein hydrolyzate with different contents of fertilizing elements, in relation to the plant species listed in the table below, were prepared for nursery use. These hydrolyzates were used for examples 19, 20 and 21, and are reported in the continuation of table 2.

**Table 2 continued**

| Es | IP 1 (%) | IP 2 (%) | ESO (%) | Filler (%) | H2O (%) | Mixer | Molding |
|---|---|---|---|---|---|---|---|
| 19 | 22.39 | 15.45 POM | 17.11 | 45.05 | 18.15 | Brabender 35°C; 20 rpm | T=55°C; p=40bar |
| 20 | 22.44 | 15.40 FRA | 17.25 | 44.91 | 18.77 | Brabender 35°C; 20 rpm | T=55°C; p=40bar |
| 21 | 22.50 | 15.38 POI | 117.69 | 45.08 | 18.81 | Brabender 35°C; 20 rpm | T=55°C; p=40bar |

Where the protein hydrolyzates have the following composition

| Element | Tomato (hydrolyzed TOM) | Strawberry (hydrolyzed STR) | Poinsettia (hydrolyzed POI) |
|---|---|---|---|
| Nitrogen % w/w | 7 | 7 | 7 |
| Molybdenum % w/w | 0.00001 | 0.00001 | 0.00002 |
| Copper % w/w | 0.0006 | 0.0006 | 0.0006 |
| Zinc % w/w | 0.002 | 0.002 | 0.002 |
| Manganese % w/w | 0.0055 | 0.0055 | 0.011 |
| Iron % w/w | 0.0011 | 0.0011 | 0.0022 |
| Boron % w/w | 0.044 | 0.044 | 0.088 |
| Phosphorus % w/w | 0.2 | 0.15 | 0.15 |
| Magnesium % w/w | 0.4 | 0.4 | 0.6 |
| Calcium % w/w | 0.5 | 0.5 | 0.75 |
| Potassium % w/w | 0.3 | 0.45 | 0.25 |
| Humic acids % w/w | - | - | 0.3 |
| Calcium sulphate % w/w | 1 | - | - |
| Sulphuric acid % w/w | - | - | 0.8 |

### Mechanical characterizations

### Example 22 Dynamic mechanical tests

The mechanical tests allowed the choice of the formulations and constituents most suitable for the various applications, and the conditions and methodologies for processing and forming the materials.

Dynamic mechanical tests were performed on specimens of a suitable size under the following operating conditions:
Temperature range considered 28-250°C, heating rate of 2°C/min at 2 Hz frequency. Using this technique it was possible to determine the dynamic modulus and the glass transition temperature (Tg) of the materials (Tables 3 and 4).

**Table 3**

| **Sample** | **Composition** | | | | **Curing** | **DMTA** | |
|---|---|---|---|---|---|---|---|
| | **IP*** (%) | **ESO** (%) | **ET(NH₂)₂ (%)** | **Filler** (%) | | **E'** (MPa) | **T_{g} (°C)** |
| **30** | 43.04 | 12.38 | 0.73 | 43.86 | 45°C. V | 1709 | 50 |
| | | | | | 70°C | 2096 | 108 |
| **31** | 43.32 | 12.58 | - | 44.10 | RT | 979 | 35 |
| | | | | | 45°C V | 1650 | 46 |
| | | | | | 70°C | 1633 | 130 |

| | | | | | | | |
|---|---|---|---|---|---|---|---|
| Filler: wood fibre V: Vacuum | | | | | | | |

### Example 23 Tensile tests

Tensile tests were performed in accordance with standard ASTM D 638, with a crosshead speed of 10 mm/min. Tables 4, 5 and 6 show the values of Young's modulus, ultimate tensile strength and elongation at break of some materials.

**Table 4**

| **Sample** | **Composition** | | | | | **Tensile Test** | | | **DMTA** | |
|---|---|---|---|---|---|---|---|---|---|---|
| | **IP* (%)** | **ESO** (%) | **ELO** (%) | **Et(NH)₂** (%) | **Filler** (%) | **E** (MPa) | **σᵣ (MPa)** | **ε** (%) | **E'** (MPa) | **T_{g} (°C)** |
| **28.1** | 43.39 | 12.41 | - | - | 44.20 | 1641 | 4 | 1 | 500 | 200 |
| **28.2** | 43.25 | 12.33 | - | 0.36 | 44.05 | 1704 | 5 | 1 | 877 | 203 |
| **28.3** | 43.05 | 12.36 | - | 0.72 | 43.87 | 1822 | 5 | 1 | 1252 | 203 |
| **27.4** | 44.80 | - | 10.78 | - | 44.42 | 1688 | 4 | 1 | 572 | 185 |
| **27.5** | 44.55 | - | 10.77 | 0.50 | 44.18 | 2053 | 10 | 1 | 1721 | 180 |

| | | | | | | | | | | |
|---|---|---|---|---|---|---|---|---|---|---|
| Filler: wood meal | | | | | | | | | | |

**Table 5**

| Sample | Composition | | | | Tensile test | | |
|---|---|---|---|---|---|---|---|
| | IP* (%) | ESO (%) | Filler (%) | ET(NH)₂ (%) | E (MPa) | σr (MPa) | ε (%) |
| 28.6 | 43.08 | 12.50 | (A) 43.94 | 0.48 | 2352 | 11 | 1 |
| 28.7 | 43.15 | 12.36 | (B) 44.01 | 0.49 | 1526 | 5 | 1 |
| 28.8 | 43.16 | 12.34 | (C) 44.01 | 0.48 | 2154 | 6 | 1 |
| 28.9 | 43.11 | 12.44 | (D) 43.97 | 0.48 | 991 | 5 | 1 |

| | | | | | | | |
|---|---|---|---|---|---|---|---|
| Filler: wood meal, (A) beech 75; (B) beech 150/75; (C) fir CB 150; (D) fir CB 250 | | | | | | | |

**Table 6**

| Sample | Composition | | | | | Tensile test | | |
|---|---|---|---|---|---|---|---|---|
| | Gel (%) | IP (%) | ESO (%) | Filler (%) | Et(NH₂) (%) | E (MPa) | σr (MPa) | ε (%) |
| 46 | 22.31 | 15.33 | 17.15 | 45.21 | - | 1963 | 3 | 0.3 |
| 46 et | 22.31 | 15.33 | 17.15 | 45.21 | 0.5 | 2067 | 6 | 0.4 |
| 47 | 22.56 | 14.99 | 17.38 | 45.07 | - | 2312 | 8 | 0.4 |
| 47 et | 22.56 | 14.99 | 17.38 | 45.07 | 0.5 | 2467 | 5 | 0.3 |
| 48 | - | 37.73 | 17.34 | 44.92 | - | 1679 | 2 | 0.2 |
| 50 | 22.31 | 15.30 | 17.10 | 45.28 | - | 1715 | 6 | 0.4 |

| | | | | | | | | |
|---|---|---|---|---|---|---|---|---|
| Filler: wood meal 75/150 | | | | | | | | |

### Example 24

The materials were compression molded and injection molded using teflon-lined moulds. The best results were obtained at a temperature of 40°C and a pressure of 80 bar.

The same materials tested for industrial molding proved to be usable at higher temperatures and pressures.

### Examples 25-28

The materials according to the invention can be used directly in aqueous suspension starting from a 20% dry matter content. The suspensions thus obtained have been used as mulching sprays, and therefore sprayed directly onto the soil of flowerbeds, and in glasshouses onto the soil of ornamental plants, at different concentrations in the range 50g/m²-500g/m², considering the dry matter applied to the soil.

The tests demonstrated that this product is suitable for use as a mulch. The quantity used depends on the desired duration and the weather conditions in the case of materials applied outdoors. The tests were repeated, varying the quantity and quality of the fibers. The experimental tests conducted in the glasshouse and the open field demonstrated a film duration and efficiency ranging from 2 to 18 months. Some formulations are shown in table 7.

**Table 7**

| Examples | Concentration (W/W) | Composition | | | | |
|---|---|---|---|---|---|---|
| | | IP (%) | ESO(%) | Filler (%) | CB (%) | EtNH₂ (%) |
| 25 | 20.83 | 60.14 | 6.70 | 30.10% | 3.07 | 0.57 |
| 26 | 20.81 | 60.21 | 6.71 | 30.07% | 3.02 | 0.57 |
| 27 | 22.00 | 56.19 | 10.00 | 29.88% | 3.36 | 0.58 |
| 28 | 21.94 | 56.32 | 9.97% | 29.97% | 3.02 | 0.58 |

## Claims

1. Biodegradable biocomposite materials obtainable by grafting protein hydrolyzates with epoxidized vegetable oils and containing a dispersion of natural fillers and/or fibers, wherein the protein hydrolyzates, epoxidized vegetable oils and natural fillers and/or fibers are present in the biocomposite in percentages ranging from 20 and 80%, 5 and 20%, and 5 and 60% by weight, respectively.

2. Materials as claimed in claim 1 wherein said vegetable oil is epoxidized linseed oil or epoxidized soybean oil.

3. Materials as claimed in claim 1 or 2 wherein said protein hydrolyzate, comprising protein hydrolyzate with gelling properties, is obtained from by-products and/or waste and/or residues from the tanning industry obtained before or after the tanning stage or from by-products and/or products of vegetable origin, agroindustrial waste, by-products and/or products from animal sources.

4. Materials as claimed in claim 3 where the protein hydrolyzate is obtained from by-products and/or waste and/or residues from the tanning industry obtained before or after the tanning stage.

5. Materials as claimed in claim 1 wherein the fillers are plant fertilizing/growth regulator agents, and/or technological agents that are selected from wood fibers and meals, cellulose and lignocellulose, calcium carbonate, calcium sulphate, talc, silica, argillaceous minerals, glass fibers, salts, protein hydrolyzates with foaming properties, acidifiers, alkalinisers, fillers, inorganic and/or organic thickeners and/or dispersants, pigments, natural plasticizers and crosslinking agents.

6. Materials as claimed in claim 5 wherein said fertilising agents are selected from salts and/or chelates and/or complexes of micro- and macro-elements, humic acids, animal or vegetable meal, distiller's wash, molasses and agrochemicals.

7. Domestic and/or industrial consumer articles prepared from the materials described in claims 1-6.

8. Articles as claimed in claim 7 in the form of plant pots, trays, seed trays, containers, nets and sheets.

9. Films, sheets and coatings obtained from the materials described in claims 1-6 with spray techniques.

10. Use of the materials described in claims 1-6 to prepare fertilisers in granular form, scales or pellets, or seed coating and microencapsulation substances.

## Patentansprüche

1. Biologisch abbaubare Bioverbundstoffmaterialien erhältlich durch Pfropfen von Proteinhydrolysaten mit epoxidierten Pflanzenölen und enthaltend eine Dispersion von natürlichen Füllstoffen und/oder Fasern, wobei die Proteinhydrolysate, epoxidierten Pflanzenöle und natürlichen Füllstoffe und/oder Fasern in dem Bioverbundstoff in Anteilen jeweils im Bereich von 20 und 80 Gew.-%, 5 und 20 Gew.-% und 5 und 60 Gew.-% vorliegen.

2. Materialien wie in Anspruch 1 beansprucht, wobei das Pflanzenöl epoxidiertes Leinsamenöl oder epoxidiertes Sojabohnenöl ist.

3. Materialien wie in Anspruch 1 oder 2 beansprucht, wobei das Proteinhydrolysat, umfassend Proteinhydrolysat mit gelbildenden Eigenschaften, aus Nebenprodukten und/oder Abfall und/oder Resten aus der Gerbereiindustrie, erhalten vor oder nach der Gerbung, oder aus Nebenprodukten und/oder Produkten pflanzlichen Ursprungs, agroindustriellem Abfall, Nebenprodukten und/oder Produkten aus tierischer Quelle erhalten wird.

4. Materialien wie in Anspruch 3 beansprucht, wobei das Proteinhydrolysat aus Nebenprodukten und/oder Abfall und/oder Resten aus der Gerbereiindustrie, erhalten vor oder nach dem Gerben, erhalten wird.

5. Materialien wie in Anspruch 1 beansprucht, wobei die Füllstoffe Pflanzendüngemittel/Wachstumsregler und/oder technologische Mittel sind, welche aus Holzfasern und Holzmehl, Cellulose und Lignocellulose, Calciumcarbonat, Calciumsulfat, Talk, Kieselsäure, tonhaltigen Mineralien, Glasfasern, Salzen, Proteinhydrolysaten mit schäumenden Eigenschaften, Säurebildnern, alkalisierenden Mitteln, Füllstoffen, anorganischen und/oder organischen Verdickungsmitteln und/oder Dispersionsmitteln, Pigmenten, natürlichen Weichmachern und Vernetzungsmitteln ausgewählt sind.

6. Materialien wie in Anspruch 5 beansprucht, wobei die Düngemittel ausgewählt sind aus Salzen und/oder Chelaten und/oder Komplexen aus Mikro- und Makroelementen, Huminsäuren, Tiermehl oder Pflanzenmehl, Treber, Molasse und Agrochemikalien.

7. Haushalts- und/oder Industriegegenstände, welche aus den Materialien, wie in den Ansprüchen 1 bis 6 beschrieben, hergestellt sind.

8. Gegenstände wie in Anspruch 7 beansprucht in Form von Pflanztöpfen, Pflanzschalen, Samenschalen, Behältern, Netzen und Bahnen.

9. Folien, Bahnen und Beschichtungen erhalten aus den Materialien, wie in den Ansprüchen 1 bis 6 beschrieben, durch Sprühtechniken.

10. Verwendung der Materialien wie in den Ansprüchen 1 bis 6 beschrieben, um Düngemittel in Granulatform, Spänen oder Pellets, oder Samenbeschichtung und Substanzen zur Mikroverkapselung herzustellen.

## Revendications

1. Matières biocomposites biodégradables pouvant être obtenues par greffage d'hydrolysats protéiniques par des huiles végétales époxydées et contenant une dispersion de charges et/ou de fibres naturelles, les hydrolysats protéiniques, les huiles végétales époxydées et les charges et/ou fibres naturelles étant présents dans le biocomposite en des pourcentages allant, respectivement, de 20 à 80%, de 5 à 20% et de 5 à 60% en poids.

2. Matières selon la revendication 1, ladite huile végétale étant de l'huile de lin époxydée ou de l'huile de soja époxydée.

3. Matières selon la revendication 1 ou 2, ledit hydrolysat protéinique, comprenant un hydrolysat protéinique doté de propriétés gélifiantes, étant obtenu à partir de sous-produits et/ou de déchets et/ou de résidus de l'industrie du tannage, obtenus avant ou après l'étape de tannage, ou de sous-produits et/ou de produits d'origine végétale, de déchets agro-industriels, de sous-produits et/ou de produits provenant de sources animales.

4. Matières selon la revendication 3, où l'hydrolysat protéinique est obtenu à partir de sous-produits et/ou de déchets et/ou de résidus de l'industrie du tannage, obtenus avant ou après l'étape de tannage.

5. Matières selon la revendication 1, les charges étant des agents de fertilisation/régulation de croissance de plantes et/ou des agents technologiques qui sont choisis parmi les fibres et les farines de bois, la cellulose et la lignocellulose, le carbonate de calcium, le sulfate de calcium, le talc, la silice, les minéraux argileux, les fibres de verre, les sels, les hydrolysats protéiniques dotés de propriétés moussantes, les acidifiants, les alcalinisants, les charges, les épaississants et/ou les dispersants inorganiques et/ou organiques, les pigments, les plastifiants et les agents réticulants naturels.

6. Matières selon la revendication 5, lesdits agents fertilisants étant choisis parmi les sels et/ou les chélates et/ou les complexes de microéléments et de macroéléments, les acides humiques, la farine animale ou végétale, la vinasse de distillerie, la mélasse et les produits agrochimiques.

7. Articles de consommation domestiques et/ou industriels préparés à partir des matières selon les revendications 1-6.

8. Articles selon la revendication 7 sous forme de pots pour plantes, de plateaux, de plateaux d'inoculation, de récipients, de filets et de feuilles.

9. Films, feuilles et revêtements, obtenus à partir des matières selon les revendications 1-6 par des techniques de pulvérisation.

10. Utilisation des matières selon les revendications 1-6 pour préparer des engrais sous forme de granulés, d'écailles ou de boulettes ou des substances de revêtement et de microencapsulation de semences.
